# EUROPÄISCHE PATENTSCHRIFT

(11) **EP 3 035 001 B1**
(45) Veröffentlichungstag und Bekanntmachung des Hinweises auf die Patenterteilung: **16.08.2017**
(21) Anmeldenummer: 14198235.5
(22) Anmeldetag: 16.12.2014
(51) Int. Cl.: G01D 5/245, G01S 17/06, G01S 17/50, G01S 7/491, G01D 5/26

(54) **Vorrichtung und Verfahren zur absoluten Positionsbestimmung eines sich bewegenden Objektes**
Device and method for determining the absolute position of a moving object
Dispositif et procédé de détermination de la position absolue d'un objet se déplaçant

(43) Veröffentlichungstag der Anmeldung: 22.06.2016
(73) Patentinhaber: SICK STEGMANN GmbH, 78166 Donaueschingen (DE)
(72) Erfinder: Basler, Stefan, 78086 Brigachtal (DE)
(74) Vertreter: Ludewigt, Christoph

(56) Entgegenhaltungen:
- WO-A2-2010/004478
- GB-A- 2 443 662
- US-B2- 7 619 744
- ARMAND PRUIJMBOOM ET AL: "<title>VCSEL-based miniature laser-Doppler interferometer</title>", PROCEEDINGS OF SPIE, Bd. 6908, 29. Januar 2008 (2008-01-29), Seiten 69080I-69080I-7, XP055208499, ISSN: 0277-786X, DOI: 10.1117/12.775131
- JÜRGEN CZARSKE ET AL: "Mode-locking external-cavity laser-diode sensor for displacement measurements of technical surfaces", APPLIED OPTICS, Bd. 44, Nr. 25, 1. Januar 2005 (2005-01-01), Seite 5180, XP055208603, ISSN: 0003-6935, DOI: 10.1364/AO.44.005180

## Beschreibung

Die vorliegende Erfindung betrifft eine Vorrichtung und ein Verfahren zur absoluten Positionsbestimmung eines sich bewegenden Objektes gemäß dem jeweiligen Oberbegriff des Anspruchs 1 bzw. 7.

In vielen industriellen Anwendungen ist die Position eines sich bewegenden Objektes in Bezug zu einem ortsfesten Bezugssystem wichtig für einen einwandfreien Ablauf. Z. B. ist es bei der Herstellung von Druckpapierrollen in der Papierindustrie essentiell, einen Abschnitt eines laufenden Papierbandes zu erkennen, um einen Schnitt für eine vorgegebene Länge der Papierrolle auszuführen. Hierbei ist es wichtig, eine Markierung des Abschnittendes präzise zu erkennen.

Zum Erkennen der Markierung sind im Stand der Technik unterschiedliche Technologien bekannt, die die präzise Erkennung der Markierung durchführen können. Aus technischen Gründen, wie verbesserte Freiheitsgrade in der Montage oder verringerter Verschleiß, ist eine berührungslose Erfassung wünschenswert. Dabei können die bekannten Vorrichtungen bzw. Verfahren ausschließlich Positionsänderungen erfassen, aber keine Absolutionsposition bzw. Indexposition.

Aus der wissenschaftlichen Veröffentlichung "VCSEL-based miniature laser-Doppler interferometer", Proc. of SPIE Vol. 6908, 690801-01 bis 07, ist eine auf Laserlicht basierende Technologie beschrieben, bei der ein sich bewegendes Objekt mit einem Laser, der kohärentes Licht aussendet, bestrahlt wird.

Ein Teil des ausgesendeten Lichts wird an der Oberfläche des sich bewegenden Objektes zurück zum Laser reflektiert, wobei dieser rückreflektierte Teil des ausgesandten Lichts aufgrund des durch die Bewegung des Objektes hervorgerufenen Doppler-Effekts einen Phasenversatz zu dem ausgesandten Licht erfährt.

Es ergibt sich eine selbstmischende Interferenz zwischen dem ausgesandten und rückreflektierten Licht, wodurch eine periodische Schwingung der Intensität des Lasers entsteht.

Anhand der Erfassung der Frequenzänderung und der Signalform der Intensität können eine Geschwindigkeit und eine Richtung des sich bewegenden Objektes detektiert werden.

WO 2010/004478 A2 offenbart eine Messvorrichtung gemäß dem Oberbegriff des Anspruchs 1. Hierbei misst die Messvorrichtung die Verschiebungen, Geschwindigkeiten oder Drehbewegungen eines diffraktiven Elements gegenüber der Messvorrichtung. Dabei bestrahlt ein Laser einen drehenden Zylinder, wobei der Laser achsversetzt zu dem Zylinder angeordnet ist. Die rückreflektierten Strahlen werden in dem Laserresonator durch Interferenz zum Schwingen gebracht. Anhand der schwingenden Intensität des interferierenden Laserlichts werden die Parameter bzgl. der Verschiebung bzw. des Abstandes oder der Geschwindigkeit des Zylinders detektiert.

Es ist eine Aufgabe der vorliegenden Erfindung, eine Vorrichtung zur absoluten Positionsbestimmung eines sich bewegenden Objektes zur Verfügung zu stellen, die eine genaue berührungslose Positionsmessung ermöglicht.

Die Aufgabe wird erfindungsgemäß gelöst durch eine Vorrichtung zur absoluten Positionsbestimmung eines sich bewegenden Objektes mit den Merkmalen des Anspruchs 1.

Durch die Betrachtung der Intensität des erzeugten Lichts direkt im Resonator an der Lichtquelle ergibt sich der Vorteil, dass die gesamte Vorrichtung kompakt gebaut werden kann.

Ferner benötigt die Vorrichtung lediglich ein einziges lichtempfindliches Element, um die Intensität des erzeugten Lichts zu erfassen, so dass die Vorrichtung kompakt und kostengünstig gebaut werden kann.

Vorteilhafterweise umfasst der signifikante Wert der Amplitudenänderung einen maximalen oder minimalen Wert.

Gemäß einem weiteren bevorzugten Ausführungsbeispiel ist die Codierungsmarke auf die Oberfläche des Objektes geklebt oder in die Oberfläche des Objektes poliert oder gefräst oder anderweitig eingebracht.

Gemäß einem weiteren bevorzugten Ausführungsbeispiel weist die Codierungsmarke einen größeren oder kleineren Absorptionsgrad oder Reflexionsgrad des erzeugten Lichts gegenüber der Oberfläche des Objektes auf.

Gemäß einem weiteren bevorzugten Ausführungsbeispiel passt die Auswerteeinheit den Schwellwert entsprechend der Bewegungsgeschwindigkeit der Lichtquelle gegenüber dem Objekt und/oder einer Änderung in der Oberfläche des Objektes an. Hierdurch ist es vorteilhaft, dass auf eine Änderung der Intensität während der Bewegung, bei der die Änderung der Intensität deutlich unterhalb einer vorgegebenen Intensitätsänderung einer Codierungsmarke liegt, mit einer Anpassung des Schwellwertes reagiert werden kann.

Es ist ferner eine Aufgabe der vorliegenden Erfindung, ein Verfahren zum Bestimmen eines absoluten Positionssignals eines sich bewegenden Objektes zur Verfügung zu stellen, das eine genaue berührungslose Positionsmessung ermöglicht.

Die Aufgabe wird erfindungsgemäß gelöst durch ein Verfahren zum Bestimmen eines absoluten Positionssignals eines sich bewegenden Objektes mit den Merkmalen des Anspruchs 7.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnungen im Einzelnen erläutert. Hierbei sind gleiche Teile in den Zeichnungen mit den gleichen Bezugszeichen gekennzeichnet. In den Zeichnungen zeigen:
- Fig. 1: eine schematische Darstellung einer erfindungsgemäßen Vorrichtung;
- Fig. 1a: eine schematische Darstellung der Parameter einer Messung über die Zeit;
- Fig. 2: eine schematische Darstellung einer alternativen erfindungsgemäßen Vorrichtung;
- Fig. 2a: eine schematische Darstellung der alternativen Parameter einer Messung über die Zeit;
- Fig. 3: eine schematische Darstellung einer alternativen erfindungsgemäßen Vorrichtung;
- Fig. 3a: eine schematische Darstellung der alternativen Parameter einer Messung über die Zeit; und

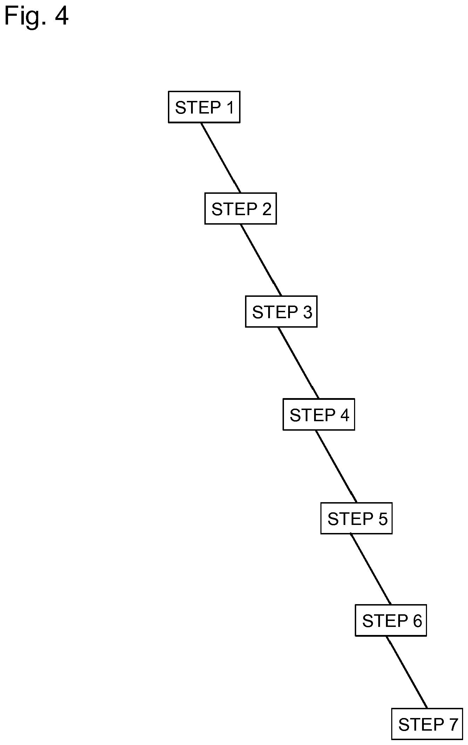

- Fig. 4: eine schematische Darstellung des erfindungsgemäßen Verfahrens.

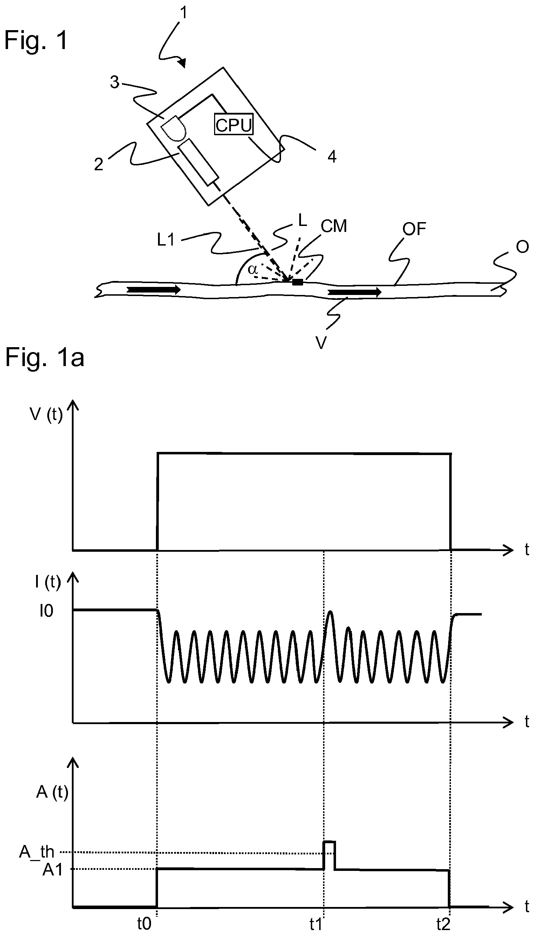

In Figur 1 ist ein erstes Ausführungsbeispiel einer erfindungsgemäßen Vorrichtung 1 zur absoluten Positionsbestimmung eines sich bewegenden Objektes O gezeigt. Hierbei besteht beispielhaft das Objekt O aus einem Band, das sich mit einer Geschwindigkeit V in einer Richtung zu der Vorrichtung 1 bewegt.

Die Vorrichtung 1 umfasst zumindest eine Lichtquelle 2, die vorzugsweise aus einem Laser besteht und kohärentes Licht L erzeugt. Die Lichtquelle 2 sendet das erzeugte Licht L in einem Winkel α ungleich 90° auf eine Oberfläche OF des Objektes O aus.

Das erzeugte und ausgesandte Licht L wird entsprechend eines Absorptions- bzw. Reflexionsgrads der Oberfläche OF des Objektes O in unterschiedlichen Richtungen und Stärken an der Oberfläche OF reflektiert / absorbiert. Hierbei wird auch ein Teil des ausgesandten Lichts L in Richtung der Lichtquelle 2 zurückreflektiert.

Bei einer Bewegung des Objektes O zu der Vorrichtung 1 und somit zu der Lichtquelle 2, bewirkt der Doppler-Effekt, dass der in Richtung der Lichtquelle 2 rückreflektierte Teil des ausgesandten Lichts L1 einen Phasenversatz zu dem ausgesandten Licht L erfährt. Dadurch interferiert der in Richtung der Lichtquelle 2 rückreflektierte Teil des ausgesandten Lichts L1 mit dem erzeugten Licht L.

Die Interferenz zwischen dem erzeugten Licht L und dem rückreflektierten Teil des ausgesandten Lichts L1 bewirkt eine periodische Änderung einer Intensität I des erzeugten Lichts L in der Lichtquelle 2.

Die erfindungsgemäße Vorrichtung 1 umfasst daher ein lichtempfindliches Element 3, das die Intensität I des erzeugten Lichts L an der Lichtquelle 2 in Abhängigkeit von der Zeit t erfasst. Hierbei ist das lichtempfindliche Element 3 vorzugsweise eine Photodiode und in unmittelbare Nähe zu der Lichtquelle 2 angeordnet.

Weiterhin umfasst die erfindungsgemäße Vorrichtung 1 eine Auswerteeinheit 4, die die erfassten Daten von dem lichtempfindlichen Element 3 erhält und diese auswertet.

Die Auswerteeinheit 4 ermittelt aus einem zeitlichen Verlauf der Intensität I(t) des erzeugten Lichts L eine Amplitude A der periodischen Änderung der Intensität I der Lichtquelle 2. Hierbei identifiziert die Auswerteeinheit 4 eine Amplitudenänderung A(t). Diese Amplitudenänderung A(t) bildet in diesem Ausführungsbeispiel unmittelbar das "die Amplitudenänderung repräsentierende" Signal. Eine solche Amplitudenänderung kann durch sich ändernde Reflexionseigenschaften der Oberfläche OF bewirkt werden, insbesondere aber durch eine aufgebrachte Codierungsmarke CM.

Die Auswerteeinheit 4 ist derart ausgelegt, dass sie bei einer Änderung der Amplitude über einen Schwellwert A_th hinaus ein Positionssignal ausgibt, so dass eine absolute Position des Objektes O somit bestimmbar ist.

D. h. an dieser Position des sich bewegenden Objektes O, also z. B. wo die Codierungsmarke CM sitzt, bewirkt eine sich ändernde Rückreflexion eine Änderung der Interferenz und damit eine Änderung der Amplitude A der Intensität I der Lichtquelle 2.

### Dies soll beispielhaft erläutert werden:

Hierzu ist gemäß dem ersten Ausführungsbeispiel zumindest eine auf der Oberfläche OF des Objektes O vorgesehene Codierungsmarke CM vorgesehen, die wegen der anderen Rückreflexion eine Amplitudenänderung unter- oder oberhalb des Schwellwerts A_th bewirkt.

Die Codierungsmarke CM weist beispielsweise einen größeren Rückreflexionsgrad für das erzeugte Licht L gegenüber der Oberfläche OF des Objektes O auf. Dadurch wird ein größerer Teil des ausgesandten Lichts L rückreflektiert, wodurch sich eine stärkere Interferenz zwischen dem erzeugten und rückreflektierten Licht L und L1 ergibt und somit eine größere Amplitude der periodischen Änderung der Intensität des erzeugten Lichts L resultiert.

Bei einem kleineren Rückreflexionsgrad der Codierungsmarke CM wird das ausgesandte Licht L weniger rückreflektiert, so dass nur ein kleiner Teil des ausgesandten Lichts L rückreflektiert werden kann. Dadurch ergibt sich eine geringere Interferenz zwischen dem erzeugten und rückreflektierten Licht L und L1, was in einer geringeren Amplitude der periodischen Änderung der Intensität I des erzeugten Lichts L resultiert.

Die Auswerteeinheit 4 identifiziert eine über dem Schwellwert A_th liegende signifikante Amplitudenänderung und gibt das Positionssignal aus.

Vorteilhafterweise ist die Codierungsmarke CM auf die Oberfläche OF des Objektes O geklebt oder in die Oberfläche OF des Objektes O poliert oder gefräst oder anderweitig eingebracht ist.

Die oben beschriebene Funktion der erfindungsgemäßen Vorrichtung 1 ist in der Figur 1a schematisch anhand von drei Graphen veranschaulicht, wobei von einem Idealfall ausgegangen wird. Hierbei zeigt schematisch der erste Graph V(t) eine Auftragung der Geschwindigkeit V des Objektes O über die Zeit t. Der zweite Graph I(t) gibt schematisch die Änderung der Intensität I des erzeugten Lichts L der Lichtquelle 2 in Abhängigkeit von der Geschwindigkeit V über die Zeit t wieder. Der dritte Graph A(t) zeigt schematisch die Bestimmung des repräsentierenden Signals, das hier, wie beschrieben durch die Amplitudenänderung A(t) gebildet ist.

Bis zum Zeitpunkt t0 ruht das Objekt O, so dass im ersten Graphen V(t) die Geschwindigkeit V null beträgt. Die Lichtquelle 2 erzeugt und sendet das kohärente Licht L mit der Intensität 10 auf die Oberfläche OF des Objektes O.

Da das Objekt O sich nicht bewegt, stellt sich kein Doppler-Effekt ein, so dass sich keine Interferenz ergibt und die Intensität I des erzeugten Lichts L nicht schwingt.

Die Auswerteeinheit 4 detektiert keine Amplitude A aufgrund der nicht stattfindenden Schwingung der Intensität I des erzeugten Lichts L und somit auch keine vorhandene Amplitudenänderung.

Ab Zeitpunkt t0 bewegt sich das Objekt O mit der Geschwindigkeit V gegenüber der erfindungsgemäßen Vorrichtung 1 in Richtung des dargestellten Pfeils.

Mit der Bewegung des Objektes O relativ zu der erfindungsgemäßen Vorrichtung 1 bewirkt der Doppler-Effekt eine Interferenz zwischen dem erzeugten Licht L und dem Teil des an der Oberfläche OF des Objektes O rückreflektierten Lichts L1, so dass die Intensität I des erzeugten Lichts L der Lichtquelle 2 einer periodische Änderung unterliegt.

Die Auswerteeinheit 4 erfasst den zeitlichen Verlauf der Intensität I(t) des erzeugten Lichts L und ermittelt die Amplitude A der Änderung, insbesondere die Amplitudenänderung A(t). Die Amplitudenänderung wird im dritten Graphen A(t) angezeigt, wobei sich mit der Interferenz eine Amplitude A1 der Änderung der Intensität I einstellt.

Zum Zeitpunkt t1 trifft im ersten Ausführungsbeispiel das ausgesandte Licht L der Lichtquelle 2 auf eine auf der Oberfläche OF des Objektes O vorgesehene Codierungsmarke CM, in Form z. B. einer schwarzen Markierung, die einen geringeren Rückreflexionsgrad aufweist.

In diesem Beispiel wird ein großer Teil des ausgesandten Lichts L durch die Codierungsmarke CM absorbiert, so dass nur ein kleiner Teil rückreflektierten Lichts L1 mit dem erzeugten Licht L interferieren kann.

Die Absorption durch die Codierungsmarke CM bewirkt eine merkliche Veränderung in der Änderung der Intensität I des erzeugten Lichts L. D. h. eine andere Amplitude stellt sich ein, wobei die Amplitudenänderung über den Schwellwert A_th hinausgeht.

Die Auswerteeinheit 4 identifiziert diese Amplitudenänderung und gibt das Positionssignal aus.

Zum Zeitpunkt t2 wird das Objekt O gestoppt, so dass die Geschwindigkeit V des Objektes O auf null sinkt. Da keine relative Bewegung zwischen dem Objekt O und der erfindungsgemäßen Vorrichtung 1 besteht, entfällt die Interferenz durch den Doppler-Effekt, so dass die Intensität I des erzeugten Lichts L ihren konstanten Wert I0 wieder einnimmt. D. h. die Schwingung und somit die Amplitudenänderung der Intensität I des erzeugten Lichts L kann nicht mehr auftreten.

Die absolute Position des Objektes O, insbesondere der Codierungsmarke CM, ist somit präzise und berührungslos bestimmt.

Für den Fall einer fortgesetzten Bewegung des Objektes O nach dem Zeitpunkt t2 würde der beschriebene Ablauf kontinuierlich fortgeführt werden.

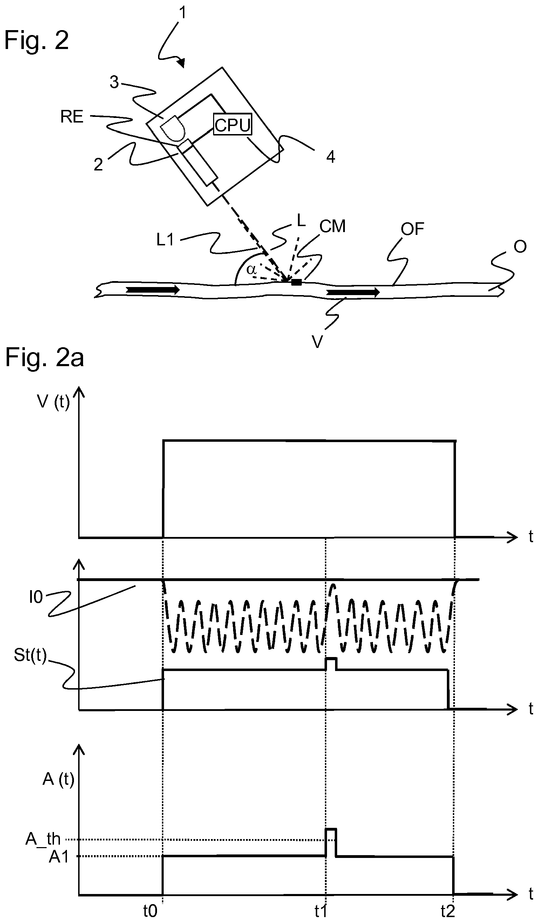

Gemäß einem zweiten in Figur 2 gezeigten Ausführungsbeispiel der erfindungsgemäßen Vorrichtung 1, umfasst die Vorrichtung 1 eine Regeleinheit RE zum Regeln der Leistung der Lichtquelle 2.

Die Auswerteeinheit 4 erzeugt entsprechend der Amplitudenänderung des erzeugten Lichts L jeweils ein Stellsignal St, so dass die Auswerteeinheit 4 mittels der Regeleinheit RE die Amplitudenänderung der Intensität I des erzeugten Lichts L auf null regelt. D. h. trotz der Interferenz zwischen dem Teil des rückreflektierten Lichts L1 und dem erzeugten Licht L der Lichtquelle 2 hält die Auswerteeinheit 4 mit dem Stellsignal St die Intensität I des erzeugten Lichts L konstant.

Hierbei ergibt sich im Idealfall für das Stellsignal St ebenfalls eine entgegengesetzt zu der Änderung der Intensität I des erzeugten Lichts periodische Änderung mit einer entsprechende Amplitudenänderung.

Die Regelung der Intensität I des erzeugten Lichts L durch die Auswerteeinheit 4 mittels des Stellsignals St wird in der Figur 2a anhand der drei dargestellten Graphen veranschaulicht.

Wie in der Figur 1a, zeigt der erste Graph V(t) der Figur 2a die Auftragung der Geschwindigkeit V des Objektes gegenüber der erfindungsgemäßen Vorrichtung 1 über die Zeit t.

Bis zum Zeitpunkt t0 findet keine relative Bewegung zwischen dem Objekt O und der erfindungsgemäßen Vorrichtung 1 statt, so dass die Geschwindigkeit V null beträgt. Ab dem Zeitpunkt t1 wird das Objekt O mit einer konstanten Geschwindigkeit gegenüber der erfindungsgemäßen Vorrichtung 1 bewegt und zum Zeitpunkt t2 wieder gestoppt.

Im zweiten Graphen wird, wie in der Figur 1a, die Intensität I des erzeugten Lichts L der Lichtquelle 2 dargestellt. Im Gegensatz zum Ausführungsbeispiel der Figuren 1 und 1a wird die Intensität I des erzeugten Lichts L bei diesem zweiten, alternativen Ausführungsbeispiel durch die Auswerteeinheit 4 mittels der Regeleinheit RE auf einen konstanten Wert 10 geregelt. Durch die Bewegung des Objektes O ab dem Zeitpunkt t0 tritt die Interferenz zwischen dem Teil des rückreflektierten Lichts L1 und dem erzeugten Licht L der Lichtquelle 2 durch den Doppler-Effekt auf. Die gestrichelte Linie stellt schematisch die, wie aus der Figur 1a bekannte, Änderung der Intensität I durch den Doppler-Effekt ohne Regelung dar.

Erfindungsgemäß wird die Amplitudenänderung der Intensität I des erzeugten Lichts L bestimmt, die graphisch den Verlauf der Änderung der Intensität I einhüllt. Hieraus ermittelt die Auswerteeinheit 4 ein Stellsignal St(t) für die Regeleinheit RE, so dass die Amplitudenänderung und somit die Einhüllende der Änderung der Intensität I auf einen konstanten Wert geregelt wird.

In demselben Graph ist der Verlauf des Stellsignals St(t) der Regeleinheit RE schematisch dargestellt. Ab dem Zeitpunkt t0 erfasst die Auswerteeinheit 4 die Amplitudenänderung der Intensität I des erzeugten Lichts L und erzeugt das Stellsignal St mit einer entsprechend zu der Amplitude der Änderung der Intensität I entgegengesetzte Amplitude an die Regeleinheit RE, um die Änderung der Amplitude der Intensität I des erzeugten Lichts L aus zu regeln.

Zum Zeitpunkt t1 trifft das ausgesandte Licht L der Lichtquelle 2 auf die Codierungsmarke CM auf der Oberfläche OF des Objektes O, so dass wie im ersten Ausführungsbeispiel eine Amplitudenänderung der Intensität I des erzeugten Lichts L der Lichtquelle 2 auftritt, die aber ausgeregelt wird und sich daher in einer Amplitudenänderung A(t) des Stellsignals St wiederspiegelt. Diese Amplitudenänderung A(t) des Stellsignals St ist in dem dritten Graph der Figur 2a dargestellt, der somit dem der Figur 1a entspricht. D. h. bei diesem Ausführungsbeispiel bildet die Amplitudenänderung A(t) des Stellsignals St das "die Amplitudenänderung repräsentierende" Signal.

Wie im ersten Ausführungsbeispiel wird ein Überschreiten des Schwellwerts A_th durch die Auswerteeinheit 4 ermittelt und gleichzeitig das Positionssignal ausgegeben, so dass die absolute Position anhand der Codierungsmarke CM auf der Oberfläche OF des Objektes O bestimmbar ist.

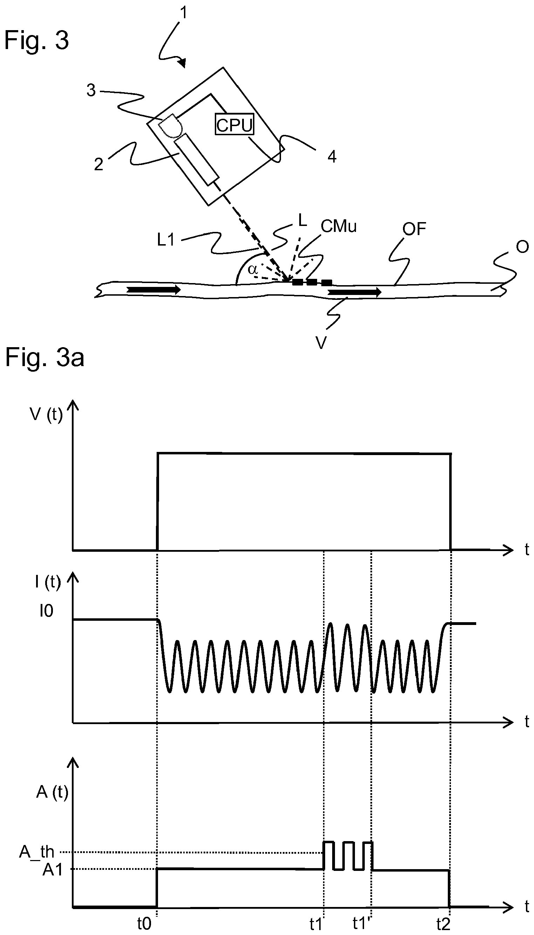

In einem weiteren bevorzugten Ausführungsbeispiel, Figur 3, ist anstatt einer einzelnen Codierungsmarke CM ein Codierungsmuster CMu mit einem vorgegebenen Muster auf der Oberfläche OF des Objektes O angebracht.

Wie in den beiden vorherigen bevorzugten Ausführungsbeispielen bewirkt die Bewegung des Objektes O zu der erfindungsgemäßen Vorrichtung 1 den Phasenversatz zwischen dem ausgesandten Licht L der Lichtquelle 2 der erfindungsgemäßen Vorrichtung 1 und dem rückreflektierten Teil des ausgesandten Lichts L1, so dass die Interferenz die periodische Änderung der Intensität I auslöst.

In der Figur 3a ist die zeitliche Änderung der Geschwindigkeit V(t), der Intensität I(t) und der Amplitude A(t) dargestellt.

Im Unterschied zu den beiden vorherigen bevorzugten Ausführungsbeispielen weist die Intensität über die Zeit I(t) dieses Ausführungsbeispiels eine Intensitätsänderung mit einem Muster gemäß dem Codierungsmuster CMu auf. Das vorgegebene Muster des Codierungsmusters CMu bewirkt somit ein wiedererkennbares Muster bei der Intensitätsänderung.

Anhand des lichtempfindlichen Elements 3 und der Auswerteeinheit 4 kann das in der Amplitudenänderung über die Zeit A(t) wiedergegebene Muster identifiziert werden.

Das Muster tritt in einer Zeitspanne zwischen den Zeitpunkten t1 und t1' auf, wobei die Amplitudenänderung jeweils den Schwellenwert A_th überschreitet.

Die Auswerteeinheit 4 identifiziert und gibt die Information bezüglich der absoluten Position des Codierungsmusters CMu wieder.

Hierbei können gemäß einem Ausführungsbeispiel die Auswerteeinheit 4 den Schwellwert A_th entsprechend der Bewegungsgeschwindigkeit V(t) der Lichtquelle 2 gegenüber dem Objekt O und/oder einer Änderung in der Oberfläche OF des Objektes O anpassen, wodurch vorteilhafterweise auf eine Änderung der Intensität während der Bewegung, bei der die Änderung der Intensität I deutlich unterhalb einer vorgegebenen Intensitätsänderung einer Codierungsmarke CM liegt, mit einer Anpassung des Schwellwertes A_th reagiert werden kann.

Vorteilhafterweise können in dem Codierungsmuster CMu neben der Information bezüglich der absoluten Position auch weitere zusätzliche Informationen vorgegeben sein. Hierdurch kann die Auswerteeinheit 4 sämtliche in dem Codierungsmuster CMu vorgegebene Information identifizieren und auswerten.

Aus der Beschreibung der alternativen Ausführungsbeispiele der Erfindung ist entnehmbar, dass eine Veränderung des erzeugten Lichts L an der Lichtquelle 2, d.h. direkt am Resonator der Lichtquelle 2, betrachtet wird, wobei die Änderung durch die Bewegung und die Oberflächeneigenschaften des Objektes O hervorgerufen wird. Dadurch kann die erfindungsgemäße Vorrichtung 1 kompakt und kostengünstig gebaut werden.

Figur 5 zeigt schematisch die Schritte des erfindungsgemäßen Verfahrens zur absoluten Positionsbestimmung eines sich bewegenden Objektes O.

Das Objekt O wird relativ zu der erfindungsgemäßen Vorrichtung 1 bewegt. In einem ersten Schritt STEP 1 wird kohärentes Licht L durch die Lichtquelle 2 erzeugt. Das erzeugte kohärente Licht L wird in einem Winkel α ungleich 90° auf eine Oberfläche OF des sich bewegenden Objektes O in einem zweiten Schritt STEP 2 gesendet.

Die Auswerteeinheit 4 der erfindungsgemäßen Vorrichtung 1 erfasst in einem dritten Schritt STEP 3 eine Intensität I des erzeugten Lichts L in Abhängigkeit von der Zeit t. Aus dem zeitlichen Verlauf der Intensität I(t) des erzeugten Lichts L ermittelt in einem vierten Schritt STEP 4 die Auswerteeinheit 4 eine Amplitude A der Änderung eines Signals, das von der Interferenz des erzeugten Lichts L abhängt.

Hieraus identifiziert die Auswerteeinheit 4 in einem fünften Schritt STEP 5 eine Amplitudenänderung. Hierbei wird in einem sechsten Schritt STEP 6 das die Amplitudenänderung repräsentierende Signal aus einem signifikanten Wert A der Amplitudenänderung der Intensität oder des Stellsignals St, das zum Regeln der Intensität dient, ermittelt.

Wenn das ermittelte die Amplitudenänderung repräsentierende Signal sich über einen Schwellwert A_th ändert, dann gibt die Auswerteeinheit 4 in einem siebten Schritt STEP 7 ein Positionssignal aus, so dass wie in diesem Falle die absolute Position der Codierungsmarke CM bzw. des Codierungsmusters CMu detektierbar ist.

### Bezugszeichenliste

- 1: Vorrichtung
- 2: Lichtquelle
- 3: Lichtempfindliches Element
- 4: Auswerteeinheit
- A, A1: Amplitude
- A(t): Amplitudenänderung über die Zeit
- A_th: Schwellwert der Amplitude
- CM: Codierungsmarke
- CMu: Codierungsmuster
- I, 10: Intensität
- I(t): Intensität über die Zeit
- L: Licht
- L1: Rückreflektiertes Licht
- O: Objekt
- OF: Oberfläche
- St: Stellsignal
- St(t): Stellsignal über die Zeit
- t, t0, t1, t1', t2: Zeit
- V: Geschwindigkeit
- V(t): Geschwindigkeit über die Zeit
- α: Winkel

## Patentansprüche

1. Vorrichtung (1) zur absoluten Positionsbestimmung eines sich bewegenden Objektes (O), umfassend
zumindest eine Lichtquelle (2), die ein Laser ist, kohärentes Licht (L) erzeugt und in einem Winkel (α) ungleich 90° auf eine Oberfläche (OF) des Objektes (O) aussendet, wobei eine selbstmischende Interferenz innerhalb des Lasers zwischen dem erzeugten Licht (L) und einem rückreflektierten Licht sich ergibt, ein lichtempfindliches Element (3), das eine Photodiode ist und eine Intensität (I) des erzeugten Lichts (L) in Abhängigkeit von der Zeit (t) erfasst, die eine periodische Schwingung der Intensität des Lasers wiedergibt, und
eine Auswerteeinheit (4), die aus einem zeitlichen Verlauf der Intensität (I(t)) des erzeugten Lichts (L) eine Amplitude (A) ermittelt, wobei die Auswerteeinheit (4) ausgelegt ist, eine Amplitudenänderung zu identifizieren, ein die Amplitudenänderung repräsentierendes Signal zu ermitteln und bei einer Änderung des Signals über einen Schwellwert (A_th) ein Positionssignal auszugeben, **dadurch gekennzeichnet, dass** zumindest eine auf der Oberfläche (OF) des Objektes (O) vorgesehene Codierungsmarke (CM) vorgesehen ist, die die Amplitudenänderung unter- oder oberhalb des Schwellwerts (A_th) bewirkt, und die Auswerteeinheit (4) ein Stellsignal entsprechend der Amplitudenänderung erzeugt und mittels einer Regeleinheit (RE) die Amplitudenänderung der Intensität (I) des erzeugten Lichts (L) auf null regelt, und wobei das repräsentierende Signal das Stellsignal (St) darstellt, bei dem sich ein signifikanter Wert für die Amplitudenänderung des Stellsignals (St) ergibt.

2. Vorrichtung (1) nach Anspruch1, **dadurch gekennzeichnet, dass** der signifikante Wert der Amplitudenänderung einen maximalen oder minimalen Wert umfasst.

3. Vorrichtung (1) nach Anspruch 1, **dadurch gekennzeichnet, dass** das repräsentierende Signal ein vorgegebenes Muster der Amplitudenänderung wiedergibt.

4. Vorrichtung (1) nach Anspruch 1, **dadurch gekennzeichnet, dass** die Codierungsmarke (CM) einen größeren oder kleineren Rückreflexionsgrad des erzeugten Lichts (L) gegenüber der Oberfläche (OF) des Objektes (O) aufweist.

5. Vorrichtung (1) nach Anspruch 4, **dadurch gekennzeichnet, dass** die Codierungsmarke (CM) auf die Oberfläche (OF) des Objektes (O) geklebt oder in die Oberfläche (OF) des Objektes (O) poliert oder gefräst oder anderweitig eingebracht ist.

6. Vorrichtung nach zumindest einem der vorhergehenden Ansprüche, **dadurch gekennzeichnet, dass** die Auswerteeinheit (4) den Schwellwert (A_th) entsprechend der Bewegungsgeschwindigkeit der Lichtquelle (2) gegenüber dem Objekt (O) und/oder einer Änderung in der Oberfläche des Objektes (O) anpasst.

7. Verfahren zum Bestimmen eines absoluten Positionssignals eines sich bewegenden Objektes (O), mit den Schritten
Erzeugen eines kohärenten Lichts (L),
Aussenden des erzeugten kohärenten Lichts (L) in einem Winkel (α) ungleich 90° auf eine Oberfläche (OF) des Objektes (O),
Erfassen einer Intensität (I) des erzeugten Lichts (L) in Abhängigkeit von der Zeit (t), die eine periodische Schwingung der Intensität aufgrund einer selbstmischenden Interferenz zwischen dem ausgesendeten Licht (L) und einem rückreflektierten Licht wiedergibt,
Ermitteln einer Amplitude (A) aus dem zeitlichen Verlauf der Intensität (I(t)) des erzeugten Lichts (L),
Identifizieren einer Amplitudenänderung,
Ermitteln eines die Amplitudenänderung repräsentierenden Signals,
Ausgeben eines Positionssignals, wenn sich das Signal über einen Schwellwert (A_th) ändert, **gekennzeichnet durch** die Schritte
Vorsehen zumindest einer Codierungsmarke (CM) auf der Oberfläche (OF) des Objektes (O), die die Amplitudenänderung unter- oder oberhalb des Schwellwerts (A_th) bewirkt,
wobei ein Stellsignal (St) entsprechend der Amplitudenänderung der Intensität (I) erzeugt und die Amplitudenänderung mittels des Stellsignals (St) auf null geregelt wird, und wobei das repräsentierende Signal aus einem signifikanten Wert der Amplitudenänderung des Stellsignals (St) ermittelt wird.

## Claims

1. An apparatus (1) for determining the absolute position of a moving object (O) comprising:
at least one light source (2), which is a laser, generates coherent light (L) and emits it at an angle (α) which is unequal 90° onto a surface (OF) of the object (O), whereby a self -mixing interference between the generated light (L) and a back-reflected light results within the laser,
a light-sensitive element (3) which is a photodiode and which detects an intensity (I) of the generated light (L) as a function of time (t) which intensity shows a periodic oscillation of the intensity of the laser,
and an evaluation unit (4) which determines an amplitude (A) from a temporal profil of the intensity (I(t)) of the generated light (L),
the evaluation unit (4) is designed to identify an amplitude change, to determine a signal representing the amplitude change and to generate a position signal upon change of the signal exceeding a threshold value (A_th),
**characterized in that**
at least one coding mark (CM) is provided on the surface (OF) of the object (O), which causes the amplitude change below or above the threshold value (A_th), and the evaluation unit (4) generates an actuating signal in accordance with the amplitude change and regulates the amplitude change of the intensity (I) of the generated light (L) to zero by means of a control unit (RE) and whereby the representing signal being the actuating signal (St), at which a significant value results for the amplitude change of the actuating signal (St).

2. An apparatus (1) in accordance with claim 1, **characterized in that** the significant value of the amplitude change comprises a maximum or minimum value.

3. An apparatus (1) in accordance with claim 1, **characterized in that** the representative signal represents a predetermined pattern of the amplitude change.

4. An apparatus (1) in accordance with claim 1, **characterized in that** the coding mark (CM) has a larger or smaller degree of re-reflection of the generated light (L) than the surface (OF) of the object (O).

5. An apparatus (1) in accordance with claim 4, **characterized in that** the coding mark is glued onto the surface of the object or is polished or milled or otherwise inserted into the surface of the object.

6. An apparatus (1) in accordance with any one of the preceding claims 1, **characterized in that** the evaluation unit (4) adapts the threshold value (A_th) according to the speed of movement of the light source (2) from the object (O) and/or a change in the surface of the object (O).

7. A method for determining an absolute position signal of a moving object (O), comprising the steps
Generating a coherent light (L),
Emitting the generated coherent light (L) at an angle (α) other than 90° to a surface (OF) of the object (O),
Detecting an intensity (I) of the generated light (L) in dependency of the time (t) which represents a periodic oscillation of intensity due to self-mixing interference between the emitted light (L) and a re-reflected light,
Determining an amplitude (A) from the temporal course of the intensity (I(t)) of the generated light (L),
Identifying an amplitude change,
Determining a signal representing the amplitude change,
Outputting a position signal when the signal changes over a threshold value (A_th), **characterized by** the steps
Providing at least one coding mark (CM) on the surface (OF) of the object (O) which causes the amplitude change below or above the threshold value (A_th),
wherein a adjusting signal (St) is generated according to the amplitude change of intensity (I) and the amplitude change is controlled by the means of a adjusting signal (St) to zero and wherein the representing signal is determined by a significant value of the amplitude change of the adjusting signal (St).

## Revendications

1. Dispositif (1) pour déterminer la position absolue d'un objet mobile (O) comprenant:
au moins une source de lumière (2), qui est un laser, génère une lumière cohérente (L) et
l'émet à un angle (α) inégal de 90 ° sur une surface (OF) de l'objet (O), de sorte qu'une interférence auto-mélangeante entre les lumières générées (L) et une lumière rétro-réfléchie résultats dans le laser,
un élément photosensible (3) qui est une photodiode et qui détecte une intensité (I) de la lumière générée (L) en fonction du temps (t) quelle intensité montre une oscillation périodique de l'intensité du laser,
et une unité d'évaluation (4) qui détermine une amplitude (A) d'un profil temporel de l'intensité (I(t)) de la lumière générée (L),
l'unité d'évaluation (4) est conçue pour identifier un changement d'amplitude, pour déterminer un signal représentant le changement d'amplitude et pour générer un signal de position lors du changement du signal dépassant une valeur de seuil (A_th),
**caractérisé en ce que**
au moins une marque de codage (CM) est fournie sur la surface (OF) de l'objet (O), ce qui provoque le changement d'amplitude au-dessous ou au-dessus de la valeur de seuil (A_th), et l'unité d'évaluation (4) génère un signal d'actionnement en fonction du changement d'amplitude et régule le changement d'amplitude de l'intensité (I) de la lumière générée (L) à zéro au moyen d'une unité de commande (RE) et le signal de représentation étant le signal d'actionnement (St), auquel une valeur significative résulte de la variation d'amplitude du signal d'actionnement (St).

2. Dispositif (1) selon la revendication 1, **caractérisé en ce que** la valeur significative du changement d'amplitude comprend une valeur maximale ou minimale.

3. Dispositif (1) selon la revendication 1, **caractérisé en ce que** le signal représentatif représente un motif prédéterminé du changement d'amplitude.

4. Dispositif (1) selon la revendication 1, **caractérisé en ce que** la marque de codage (CM) a un plus grand ou plus petit degré de réflexion de la lumière générée (L) que la surface (OF) de l'objet (O).

5. Dispositif (1) selon la revendication 4, **caractérisé en ce que** le repère de codage est collé sur la surface de l'objet ou est polie ou broyé ou inséré autrement dans la surface de l'objet.

6. Dispositif (1) selon au moins l'une des revendications précédentes,
**caractérisé en ce que** l'unité d'évaluation (4) adapte la valeur de seuil (A_th) en fonction de la vitesse de déplacement de la source de lumière (2) de l'objet (O) et/ou d'une modification de la surface de l'objet (O).

7. Procédé pour déterminer un signal de position absolue d'un objet mobile (O), comprenant les étapes
Générer une lumière cohérente (L),
Émettant la lumière cohérente générée (L) à un angle (α) autre que 90° par rapport à une surface (OF) de l'objet (O)
Détection d'une intensité (I) de la lumière générée (L) en fonction du temps (t) qui représente une oscillation d'intensité périodique due à des interférences entre la lumière émise (L) et une lumière ré-réfléchie,
Déterminer une amplitude (A) du cours temporel de l'intensité (I(t)) de la lumière générée (L), Identifier un changement d'amplitude,
Déterminer un signal représentant le changement d'amplitude,
Sortie d'un signal de position lorsque le signal change sur une valeur de seuil (A_th), **caractérisé par** les étapes
Fournir au moins une marque de codage (CM) sur la surface (OF) de l'objet (O) qui provoque le changement d'amplitude au-dessous ou au-dessus de la valeur de seuil (A_th),
dans lequel un signal de réglage (St) est généré en fonction du changement d'amplitude d'intensité (I) et le changement d'amplitude est commandé au moyen d'un signal de réglage (St) à zéro et dans lequel le signal de représentation est déterminé par une valeur significative du changement d'amplitude du signal de réglage (St).
